# EUROPEAN PATENT SPECIFICATION

(11) **EP 4 296 421 B1**
(45) Date of publication and mention of the grant of the patent: **18.02.2026**
(21) Application number: 21926316.7
(22) Date of filing: 18.10.2021
(51) Int. Cl.: D06F 39/02, D06F 58/24

(54) **WATER BOX ASSEMBLY, DETERGENT DISPENSING ASSEMBLY OF WASHER-DRYER, AND WASHER-DRYER**
WASSERKASTENANORDNUNG, WASCHMITTELAUSGABEANORDNUNG EINES WASCHTROCKNERS UND WASCHTROCKNER
ENSEMBLE BOÎTE À EAU, ENSEMBLE DE DISTRIBUTION DE DÉTERGENT DE LAVE-LINGE SÉCHANT, ET LAVE-LINGE SÉCHANT

(30) Priority: 22.02.2021 CN 202110199081
(43) Date of publication of application: 27.12.2023
(73) Proprietor: Gree Electric Appliances, Inc. of Zhuhai, Zhuhai, Guangdong 519070 (CN)
(72) Inventor: MA, Xianglong, Zhuhai, Guangdong 519070 (CN); DING, Jinbiao, Zhuhai, Guangdong 519070 (CN); FENG, Ying, Zhuhai, Guangdong 519070 (CN); ZHANG, Xian, Zhuhai, Guangdong 519070 (CN); OU, Tusheng, Zhuhai, Guangdong 519070 (CN)
(74) Representative: Zacco GmbH
(86) International application number: PCT/CN2021/124462
(87) International publication number: WO 2022/174602

(56) References cited:
- CN-A- 106 930 059
- CN-A- 107 022 883
- CN-A- 109 440 402
- CN-A- 112 376 246
- CN-A- 112 878 008
- JP-A- 2013 009 810
- JP-A- H11 114 286
- US-A1- 2017 233 919
- US-A1- 2017 298 561
- US-B2- 10 011 940
- US-B2- 9 951 460

## Description

### Cross-Reference to Related Application

The present invention claims priority benefit of Chinese Patent Application No. 202110199081.2, filed to the China National Intellectual Property Administration on February, 22, 2021 and entitled "Water Box Assembly, Detergent Dispensing Assembly of Washer-Dryer, and Washer-Dryer".

### Technical Field

The present invention relates to the related technical field of washer-dryers, in particular to a water box assembly, a detergent dispensing assembly of a washer-dryer, and a washer-dryer.

### Background

At present, a washer-dryer has become a popular trend. An air duct is added above the washer-dryer to dry clothes. During a drying process, hot steam in a drum may enter a water box from a steam exhaust pipe, due to the condensation phenomenon caused by temperature changes, a large number of condensation water drops appear inside the water box and at a handle, and the water drops may drip after being pulled out. In order to avoid condensation, a storage tank for the washer-dryer and the washer-dryer are provided in the related art, but a condensation structure is designed at a rear end of the water box, and condensation is performed by multiple blocking ribs and continuously feeding condensate water, so that a drying effect on the clothes in the drum is affected by continuously feeding water. The above-mentioned problem may not be fundamentally solved.

US2017/298561A1 discloses a method of removing lint from drying air in a laundry treating appliance having a treating chamber, a treating chemistry dispenser, and an air supply.

US2017/233919A1 discloses a washing machine using an air discharge part disposed next to a detergent container to reduce humidity of the air flow exiting from the tub during a drying process.

### Summary

The invention is defined by the independent claim. Embodiments are given by the dependent claims.

In view of this, the present invention discloses a water box assembly, a detergent dispensing assembly of a washer-dryer, and the washer-dryer for solving at least the problem that outer parts such as a panel of the washer-dryer is prone to condensation.

In order to achieve the above-mentioned object, the technical solution adopted in the present invention is as follows.

In a first aspect, the present invention discloses a water box assembly. The water box assembly includes a water receiving hopper and a runner plate.

The water box assembly is provided with a water tank, and the water receiving hopper is provided with a steam inlet part connecting the inside and outside of the water tank. The steam inlet part includes a steam inlet channel, the steam inlet channel having multi-stage direction changes in an extension direction thereof for liquefying inlet steam inside the channel, a first end of the steam inlet channel being in communication with the outside of the water tank, and a second end of the steam inlet channel being in communication with the inside of the water tank.

The runner plate is arranged at an upper part of the water tank and is detachably connected with the water receiving hopper, and the runner plate is cooperated with the water receiving hopper to form a mounting space for mounting a detergent box.

Further, the water receiving hopper is provided with a drain hole connected with the water tank, and the drain hole is arranged at a bottom of the water receiving hopper and is located at an end away from the steam inlet channel.

Further, the steam inlet part further includes a steam inlet port.

The steam inlet port is arranged on a side wall of the water receiving hopper, and an end of the steam inlet port is connected to a first end of the steam inlet channel while the other end of the steam inlet port is configured to introduce the inlet steam.

Further, the steam inlet channel includes a first steam inlet channel, a second steam inlet channel, a third steam inlet channel and a fourth steam inlet channel which are in communication in sequence.

The first steam inlet channel, the second steam inlet channel, the third steam inlet channel and the fourth steam inlet channel form direction change points at connection places and arrange along an extending direction of the steam inlet channel, so that the steam inlet channel has a cross-sectional area of varying size.

Further, the first steam inlet channel is provided with a splitter plate arranged along the extending direction of a channel for liquefying and diverting the inlet steam.

Further, an end, provided with a steam outlet, of the first steam inlet channel is further provided with a sub steam inlet hole. The sub stream inlet hole is configured to directly divert a part of the inlet steam and/or condensation liquefied in the steam inlet channel into the water tank.

In a second aspect, the present invention discloses a detergent dispensing assembly for a washer-dryer. The dispensing assembly includes the above mentioned water box assembly and a detergent box.

The detergent box is mounted in the mounting space. A bottom wall of the detergent box is maintained at a predetermined interval from an upper surface of the water tank of the water receiving hopper to form a steam inlet gap.

Further, the bottom wall of the detergent box is provided with a flow baffle. The flow baffle is configured to guide inlet steam and increase a contact area with the inlet steam to liquefy the inlet steam.

Further, the detergent dispensing assembly further includes a panel.

The panel is provided with a mounting part configured to mount the water box assembly, and the panel is provided with a detergent box assembly opening. The detergent box is inserted into the detergent box assembly opening and is slidably connected with the water box assembly.

In a third aspect, the present invention discloses a washer-dryer. The washer-dryer includes the water box assembly as described in any one of the above, or the detergent box as described in any one of the above.

The beneficial effects are as follows: in the present invention, by improving the structure inside the water box, a flow direction of the hot steam in the water box is changed, the temperature of the steam flow is reduced by blocking ribs (including the splitter plate, the flow baffle, etc.) and the spatial change inside the structure, condensation occurs before the hot steam flows to the front end of the water box, and a part of water drops are separated out by the condensation. When the steam flow reaches the front end of the water box, the temperature is not too different from the ambient temperature, and the condensation phenomenon is solved. Since the flow of the hot steam inside the structure of the water box changes the cooling and changes the flow direction, parts inside the water box may not be deformed due to long-term exposure to high temperature environment, which improves the user experience.

### Brief Description of the Drawings

The above and other objects, features and advantages disclosed in the present invention will become more apparent by a detailed description of exemplary embodiments thereof with reference to the drawings. The drawings described below are only some embodiments of the present invention.
Fig. 1 shows a standard view of a water box assembly and a panel according to an embodiment;
Fig. 2 shows a rear view of a water box assembly and a panel according to an embodiment;
Fig. 3 shows a top view of a water box assembly and a panel according to an embodiment;
Fig. 4 shows a right local sectioned view of a water box assembly and a panel according to an embodiment;
Fig. 5 shows a left full section view of a water box assembly and a panel according to an embodiment;
Fig. 6 shows an enlarged view of a part B in Fig. 5;
Fig. 7 shows an enlarged view of a part A in Fig. 5;
Fig. 8 shows a front view of a water receiving hopper according to an embodiment;
Fig. 9 shows a top view of a water receiving hopper according to an embodiment;
Fig. 10 shows a sectional view at B-B of a water receiving hopper according to an embodiment;
Fig. 11 shows a sectional view at D-D of a water receiving hopper according to an embodiment;
Fig. 12 shows an enlarged view of a part C in Fig. 11.

In the figures:
1. Panel; 2. Detergent box; 3. Water box assembly; 21. Flow baffle; 22. Distributor box; 23. Handle; 24. Flap; 30. Steam inlet part; 31. Water receiving hopper; 32. Runner plate; 33. Steam inlet port; 34. Sub steam inlet hole; 35. splitter plate; 36. Inside of water tank.

### Detailed Description of the Embodiments

In order to make the objects, technical solutions and advantages of the embodiments of the present invention clearer, the technical solutions in the embodiments of the present invention will be clearly and completely described in conjunction with the drawings in the embodiments of the present invention. It is apparent that the described embodiments are only a part of the embodiments of the present invention, and not all of them. All other embodiments obtained by those of ordinary skill in the art based on the embodiments of the present invention without creative efforts are within the scope of protection of the present invention.

The terms used in the embodiments of the present invention are only for the purpose of describing the specific embodiments and are not intended to limit the present invention. Singular forms "a", "said", and "the" used in the embodiments of the present invention and appended claims are also intended to include plural forms, unless the context explicitly otherwise, "multiple" generally includes at least two, but does not exclude the inclusion of at least one.

It is to be understood that the term "and/or" used herein describes only an association relationship for describing associated objects and represents that three relationships may exist. For example, A and/or B may represent the following three cases: only A exists, both A and B exist, and only B exists. In addition, character "/" herein usually represents that previous and next associated objects form an "or" relationship.

It is also to be noted that terms "include" and "have" or any other variation thereof is intended to cover nonexclusive inclusions, so that a commodity or system including a series of elements not only includes those elements, but also includes other elements that are not clearly listed, or further includes elements intrinsic to the commodity or system. Under the condition of no more limitations, an element defined by statement "including a/an......" does not exclude existence of another element that is the same in a commodity or system including the element.

At present, hot steam may circulate in a water box assembly of a washer-dryer, when the steam can not be completely liquefied and condensed in a water box, condensation occurs at outer parts such as a panel. When the condensation phenomenon is serious, water drops are formed at a handle and a buckle of the water box. When a user pulls the water box, the water drops may be contacted, and the water drops may drip during a pulling process. In the present invention, a steam flow direction of the hot steam is changed by designing a structure inside the water box. The structure inside the water box is designed as a change of a steam flow channel, the hot steam flows upwards from a steam inlet pipe into a large space, then flows downwards through a small channel into another large space, and finally flows from a lower end to a front end of the water box, and the rectified layout changes the flow velocity of the steam flow, so that the steam flow is more quickly cooled inside the structure. Blocking ribs are designed in the large space of the structure inside the water box, so that the blocking ribs not only reduce the velocity of the steam flow, but also allow more steam to be condensed inside the structure, thereby reducing the temperature when the steam enters the front end of the water box.

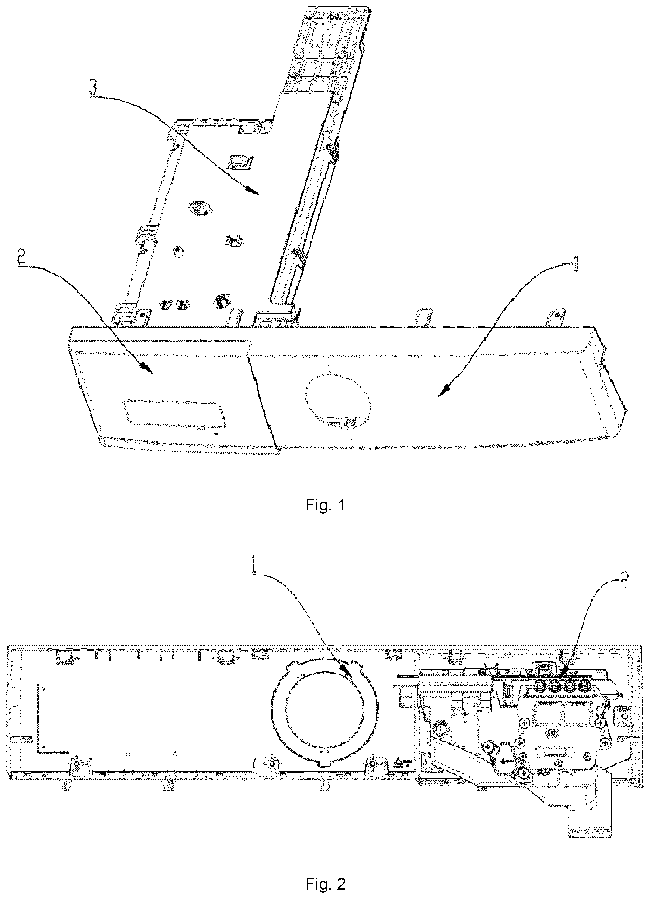

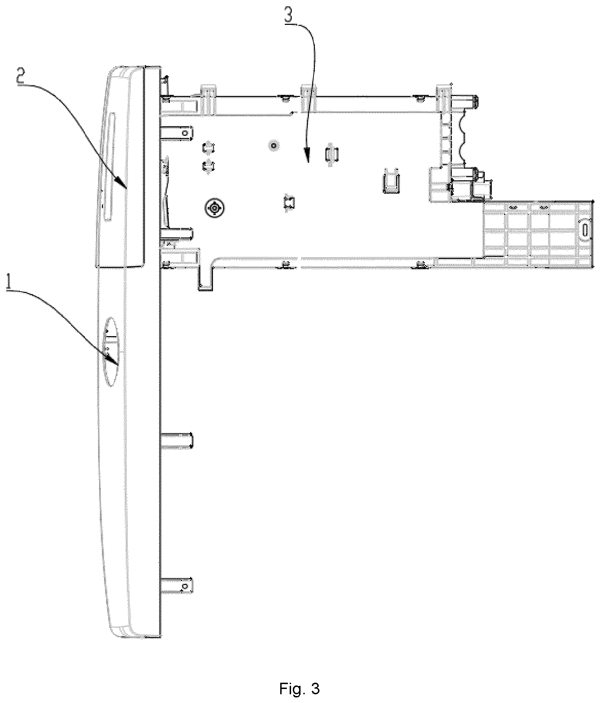

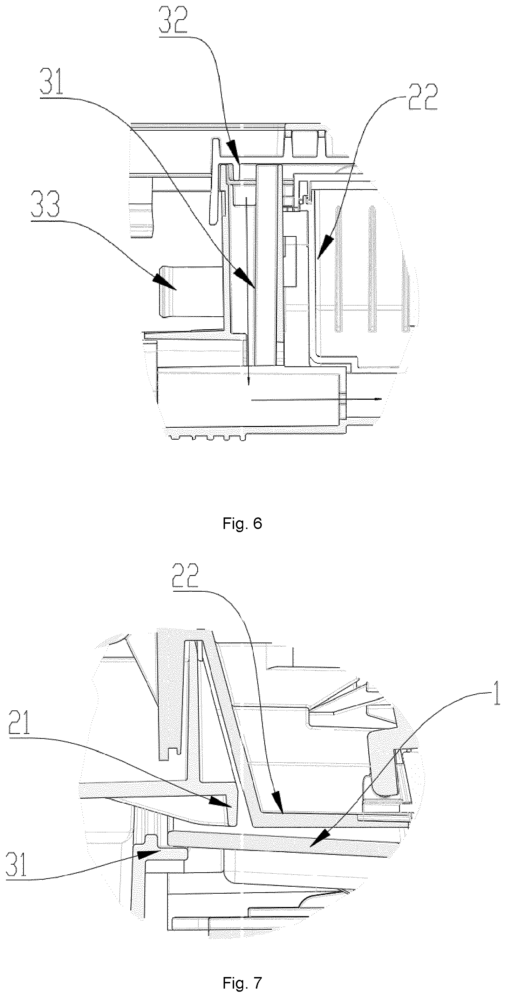

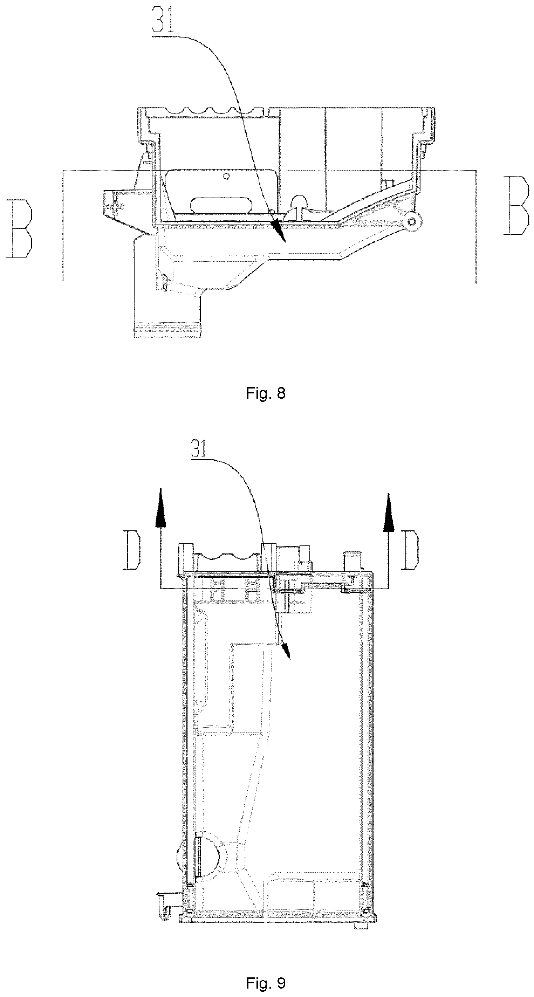

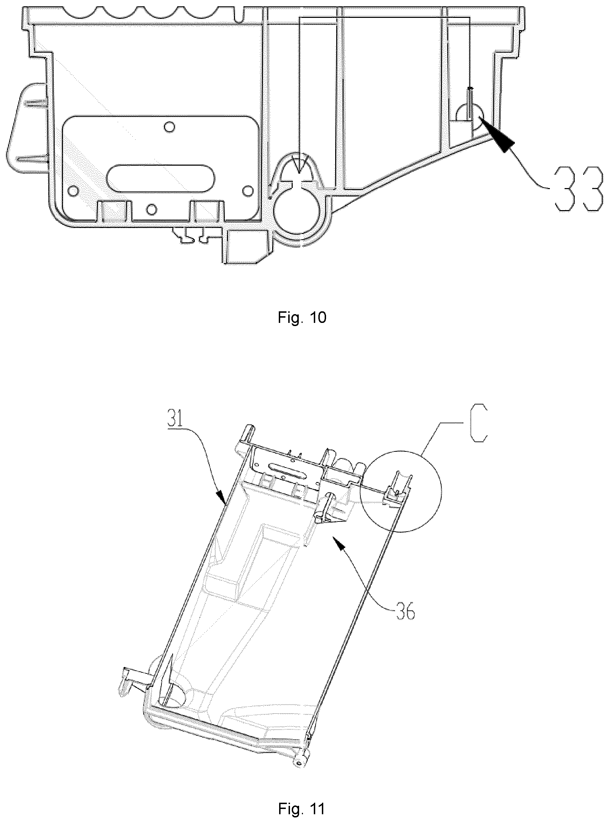

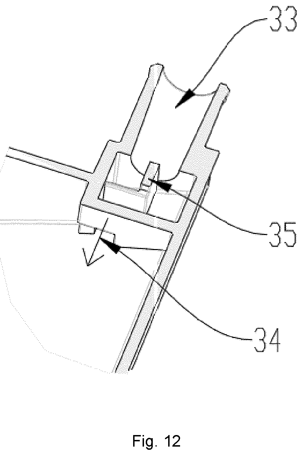

In order to further explain the technical solutions in the present invention, the following specific examples are provided in combination with Figs. 1 to 12.

### Embodiment 1

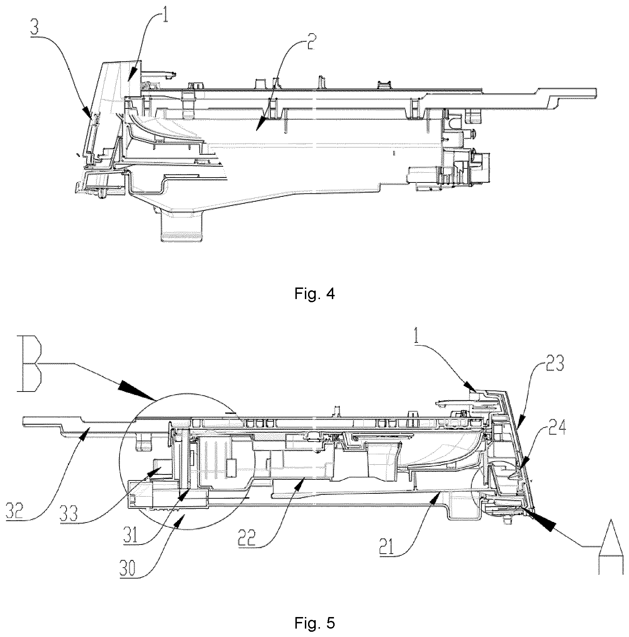

In the embodiment, a water box assembly 3 is provided. The water box assembly 3 includes a water receiving hopper 31 and a runner plate 32. The water box assembly 3 is provided with a water tank, and the water receiving hopper 31 is provided with a steam inlet part 30 connecting the inside and outside of the water tank. The steam inlet part 30 is located at a place B in Fig. 5. The steam inlet part 30 includes a steam inlet channel, the steam inlet channel having multi-stage direction changes in an extension direction thereof for liquefying inlet steam inside the channel. A first end of the steam inlet channel is in communication with the outside of the water tank, and a second end of the steam inlet channel is in communication with the inside of the water tank 36. The runner plate 32 is arranged at an upper part of the water tank and is detachably connected with the water receiving hopper 31, and the runner plate 32 cooperates with the water receiving hopper 31 to form a mounting space for mounting a detergent box 2. The water box assembly 3 in the embodiment changes a flow direction of hot steam into the water box and reduces the temperature of a steam flow, and a part of the water drops are condensed before the hot steam enters the water box in a drum of the washer-dryer, and the condensation condition at the front end of the water box is greatly improved, so as to effectively solve the condensation problem of outer parts such as a panel and a handle.

In the embodiment, the water receiving hopper 31 is provided with a drain hole being in communication with the water tank, and the drain hole is arranged at the bottom of the water receiving hopper 31 and is located at an end away from the steam inlet channel. The drain hole and the steam inlet part 30 are arranged at the relative positions, so that flow distances of the hot steam and the condensation inside the water box are increased as much as possible, so as to avoid that the steam flow is too smooth due to the fact that the condensed water flows out of the water box too quickly, and this manner improves a condensation effect inside the water box.

In some optional modes, the steam inlet part 30 further includes a steam inlet port 33. The steam inlet port 33 is arranged on a side wall of the water receiving hopper 31, and one end of the steam inlet port 33 is connected with a first end of the steam inlet channel 33 while the other end of the steam inlet port 33 is configured to introduce the steam pipe. By adding the steam inlet port 33 protruding from an outer wall of the water receiving hopper 31 of the water box, it is easy to connect a steam exhaust pipe of the washer-dryer.

In some embodiments, the steam inlet channel includes a first steam inlet channel, a second steam inlet channel, a third steam inlet channel and a fourth steam inlet channel which are connected in sequence. The first steam inlet channel, the second steam inlet channel, the third steam inlet channel and the fourth steam inlet channel form direction change points at connection places and arrange along an extension direction of the steam inlet channel, so that the steam inlet channel has cross-sectional areas of varying size. If the cross-sectional areas first increase and then decrease, then increase and then decrease, that is, after the steam inlet channels at the ends are in communication in sequence, the cross-sectional areas of the steam inlet channel have a limited number of changes, so that steam liquefaction is accelerated.

Further, the first steam inlet channel is arranged in a horizontal direction, and a steam inlet of the first steam inlet channel is located at a lower part of the water receiving hopper 31 and is in communication with the steam inlet port 33. The second steam inlet channel is arranged in a vertical direction, and a steam inlet of the second steam inlet channel is in communication with a steam outlet of the first steam inlet channel. The third steam inlet channel is arranged in the horizontal direction, and a steam inlet of the third steam inlet channel is in communication with a steam outlet of the second steam inlet channel. The fourth steam inlet channel is arranged in the vertical direction, a steam inlet of the fourth steam inlet channel is in communication with a steam outlet of the third steam inlet channel, and a steam outlet of the fourth steam inlet channel is located at the lower part of the water receiving hopper 31 and is in communication with the inside of the water tank. In the embodiment, by changing the steam inlet channel to a curved channel, the circulation speed of the hot steam is prolonged, and the liquefaction of the hot steam is accelerated. The problems such as water leakage caused by condensation of the water box in the drying process of the washer-dryer are solved, and the deformation of parts inside the water box caused by long-term high temperature is avoided, which improves the user experience.

It is to be noted that the steam inlet channel may form a curved extension channel by multiple sections connected in sequence, or may also form multiple branch channels into the inside of the water box. The number of sections of the channel is not limited and may be set according to actual conditions.

In addition, the multiple sections of the channel are able to be bent and then bent and extended in a plane, that is, when viewed from a direction of the steam inlet part 30 in the figure, the direction of the inlet steam is that the steam flow enters the steam inlet port 33 and then enters the second steam inlet channel through the steam outlet of the first steam inlet channel, changes the direction to flow upwards from the second steam inlet channel, then changes to flow to the right or left through the third steam inlet channel, then flows downwards through the fourth steam inlet channel, and finally moves from the steam outlet of the fourth steam inlet channel at the lower end to the front end of one end, close to the drain hole, of the water tank.

In some alternatives, in order to reduce processing difficulty, the second steam inlet channel and/or the third steam inlet channel and/or the fourth steam inlet channel may be arranged open towards the side inside the water tank, that is, a steam flow channel is able to be formed on the side wall. At this time, when the steam flows to the second steam inlet channel and the fourth steam inlet channel, the steam inlet channel is formed by matching an outer wall of the detergent box 2 with the steam flow channel, so as to guide and liquefy the inlet steam. When the steam flows to the third steam inlet channel, a lower wall surface of the runner plate 32 is matched with the third steam inlet channel to form the steam inlet channel of the section. This manner not only reduces the processing difficulty, but also combines the thickness of the side wall of the water receiving hopper 31 to avoid a problem that the side wall of the water receiving hopper 31 is too thin to open the corresponding steam inlet channel.

In some embodiments, the first steam inlet channel is provided with a splitter plate 35 arranged along the extending direction of the channel. The splitter plate 35 may enhance the liquefaction of the inlet steam and also divert the inlet steam. Further, an end, provided with a steam outlet, of the first steam inlet channel is further provided with a sub steam inlet hole 34. The sub stream inlet hole 34 is configured to directly divert a part of the inlet steam and/or condensation liquefied in the steam inlet channel into the water tank. It is to be noted that the sub steam inlet hole 34 may also serve as a discharge hole. During the operation of the washer-dryer, the water inside a drum is thrown out from a steam discharge hole as the drum rotates, and the sub steam inlet hole 34 is disposed below a blocking rib at the front of the steam discharge hole of the water receiving hopper 31 to timely discharge the flow, so as to prevent the water from remaining too much and overflowing the outside of the water box, thereby avoiding a problem of water leakage. In an embodiment, the blocking rib is added at the front of the sub steam inlet hole 34 to prevent the hot steam in the drum from directly blowing to the sub steam inlet hole 34 after exiting from the steam discharge hole, thereby reducing the influence of the steam inlet hole 34 on condensation.

In an embodiment, the bottom of the water tank adopts a V-shaped bottom, and the level of the steam inlet port 33 is higher than a lowest position of the bottom.

### Embodiment 2

In a second aspect, the present invention discloses a detergent dispensing assembly for a washer-dryer. The dispensing assembly includes any one of the above water box assemblies 3 in Embodiment 1 and a detergent box 2. The detergent box 2 is mounted in a mounting space. A bottom wall of the detergent box 2 is maintained at a predetermined interval from an upper surface of the water tank of the water receiving hopper 31 to form a steam inlet gap. The steam inlet gap is configured to provide a flow space of inlet steam.

In some embodiments, the bottom wall of the detergent box 2 is provided with a flow baffle 21. The flow baffle 21 is configured to guide the inlet steam and increase a contact area with the inlet steam to liquefy the inlet steam. Further, the detergent dispensing assembly further includes a panel 1. The panel 1 is provided with a mounting part configured to mount the water box assembly 3, and the panel 1 is provided with a detergent box assembly opening. The detergent box 2 is inserted into the detergent box assembly opening and is slidably connected with the water box assembly 3. It is to be noted that the panel 1 may be modularized with the detergent box 2 and the water box assembly 3 to form an integrated dispensing module, or may be an individual component of the washer-dryer to be post-assembled with the dispensing module.

Specifically, in combination with the water box assembly 3 in Embodiment 1, a specific condensation process of the detergent dispensing assembly is also provided in the embodiment.

The detergent dispensing assembly includes the detergent box 2 and the water box assembly 3. The detergent box 2 includes the flow baffle 21, a distributor box 22, a handle 23, a flap 24, etc. The water box assembly 3 includes the water receiving hopper 31, the runner plate 32, etc. The detergent box 2 and the water box assembly 3 constitute the whole dispensing system of the washer-dryer. The handle 23 and the flap 24 hung under the detergent box 2 constitute an appearance surface, and the handle 23, the flap 24 and the panel 1 together constitute the appearance of an operating system, which directly affects the user experience.

In a drying process of the washer-dryer, the hot steam in a drum enters a rear end structure of the water receiving hopper 31 (one end provided with a steam inlet part) through a steam inlet of the water receiving hopper 31, and an arrow in the figure shows a flow process of the hot steam, flowing upwards first, then flowing to the left, then flowing downwards, and finally flowing to the front end, and the steam flow blows to a front end of the water box assembly.

The runner plate 32 and the water receiving hopper 31 are connected through a snap fastener and a snap slot, the rear end structure of the water receiving hopper 31 and a lower end surface of the runner plate 32 form a closed space, after entering the steam inlet, the steam flow flows upwards through the change of the flow baffle, then flows to the left through the change of a lower end of the runner plate 32, flows downwards after being blocked by a blocking rib at the left side and finally moves from a cross hole at the lower end to the front end of the water box assembly 3. During the whole flow process, the temperature of the steam flow may decrease to a great extent, condensation phenomenon may occur due to the temperature difference in the process of the steam flow passing through the blocking rib at the rear end of the water receiving hopper 31 and the lower end of the runner plate 32, and the water content of the steam flow may decrease significantly. When the steam flow reaches the front end of the water box assembly 3, the temperature and humidity of the steam flow may decrease significantly. When the steam flow passes through an assembly gap of the detergent box 2 and the panel 1 to the surface of the handle 23 and the flap 24, the temperature difference with the outside is small, the condensation phenomenon is few, and the user does not contact the condensation water drops directly and during the pulling process, which greatly improves the user experience during the drying process of the washer-dryer.

It is to be noted that the flow baffle 21 arranged at the side close to the panel 1 may prevent the non-liquefied steam from directly blowing to the panel 1 and resulting liquefied water at the panel 1, and by adding the flow baffle 21 at this place, the assembly gap between the detergent box 2 and the operation panel 1 is significantly reduced, and the steam flow is directly blocked from blowing to the handle 23 and the flap 24, so that the occurrence of condensation phenomenon is avoided, and the intuitive experience of the user is improved.

### Embodiment 3

The embodiment provides a washer-dryer. The washer-dryer includes any one of the water box assemblies in Embodiment 1, or any one of the detergent dispensing assemblies in Embodiment 2.

Exemplary embodiments of the present invention have been specifically shown and described above. It is to be understood that the present invention is not limited to the detailed structure, arrangement mode, or implementation method described herein. On the contrary, the present invention is intended to cover various modifications and equivalent arrangements included within the scope of the appended claims.

## Claims

1. A detergent dispensing assembly for a washer-dryer, wherein the dispensing assembly comprises a water box assembly and a detergent box (2), wherein
the water box assembly (3) comprises:
a water receiving hopper (31), the water receiving hopper (31) being provided with a water tank, the water receiving hopper (31) being provided with a steam inlet part (30) connecting the inside and outside of the water tank, the steam inlet part (30) comprising a steam inlet channel, the steam inlet channel having multi-stage direction changes in an extension direction thereof, a first end of the steam inlet channel being in communication with the outside of the water tank, and a second end of the steam inlet channel being in communication with the inside of the water tank; and
a runner plate (32), the runner plate (32) being arranged at an upper part of the water tank and being detachably connected with the water receiving hopper (31), and the runner plate (32) being cooperated with the water receiving hopper (31) to form a mounting space for mounting a detergent box (2);
the detergent box (2) is mounted in the mounting space, wherein a bottom wall of the detergent box (2) is maintained at a predetermined interval from an upper surface of the water tank of the water receiving hopper to form a steam inlet gap; **characterized in that**
the steam inlet part further comprises a steam inlet port (33), wherein the steam inlet port (33) is arranged on a side wall of the water receiving hopper (31), and an end of the steam inlet port (33) is connected to a first end of the steam inlet channel while the other end of the steam inlet port is configured to introduce inlet steam; the steam inlet channel comprises a first steam inlet channel, a second steam inlet channel, a third steam inlet channel and a fourth steam inlet channel which are connected in sequence, wherein
the first steam inlet channel, the second steam inlet channel, the third steam inlet channel and the fourth steam inlet channel form direction change points at connection places and arrange along an extending direction of the steam inlet channel, so that the steam inlet channel has cross-sectional areas of varying size; wherein the first steam inlet channel is provided with a splitter plate (35) arranged along the extending direction of a channel for liquefying and diverting the inlet steam; a direction of the inlet steam is that a steam flow enters the steam inlet port (33) and then enters the second steam inlet channel through a steam outlet of the first steam inlet channel, changes the direction to flow upwards from the second steam inlet channel, then changes to flow to the right or left through the third steam inlet channel, then flows downwards through the fourth steam inlet channel, and finally moves from a steam outlet of the fourth steam inlet channel at the lower end to the front end of one end, close to the drain hole, of the water tank.

2. The detergent dispensing assembly for the washer-dryer as claimed in claim 1, wherein the water receiving hopper (31) is provided with a drain hole connected with the water tank, and the drain hole is arranged at a bottom of the water receiving hopper (31) and is located at an end away from the steam inlet channel.

3. The detergent dispensing assembly for the washer-dryer as claimed in claim 1, wherein an end, provided with a steam outlet, of the first steam inlet channel is further provided with a sub steam inlet hole (34), and the sub steam inlet hole (34) is configured to directly divert a part of the inlet steam and/or condensation liquefied in the steam inlet channel into the water tank.

4. The detergent dispensing assembly for the washer-dryer as claimed in claim 1, wherein the bottom wall of the detergent box (2) is provided with a flow baffle (21), and the flow baffle is configured to guide inlet steam and increase a contact area with the inlet steam.

5. The detergent dispensing assembly for the washer-dryer as claimed in claim 1, wherein the detergent dispensing assembly further comprises a panel (1), wherein
the panel (1) is provided with a mounting part configured to mount the water box assembly, and
the panel (1) is provided with a detergent box assembly opening, wherein the detergent box (2) is inserted into the detergent box assembly opening and is slidably connected with the water box assembly.

6. A washer-dryer, wherein the washer-dryer comprises the detergent dispensing assembly according to any one of claims 1 to 5.

## Patentansprüche

1. Waschmitteldosieranordnung für einen Waschtrockner, wobei die Dosieranordnung eine Wasserkastenanordnung und eine Waschmittelschublade (2) umfasst, wobei
die Wasserkastenanordnung (3) umfasst:
einen Wasseraufnahmebehälter (31), wobei der Wasseraufnahmebehälter (31) mit einem Wassertank versehen ist,
wobei der Wasseraufnahmebehälter (31) mit einem Dampfeinlassteil (30) versehen ist, der die Innenseite und die Außenseite des Wassertanks verbindet, wobei der Dampfeinlassteil (30) einen Dampfeinlasskanal umfasst, wobei der Dampfeinlasskanal mehrstufige Richtungsänderungen in einer Erstreckungsrichtung davon aufweist, wobei ein erstes Ende des Dampfeinlasskanals mit der Außenseite des Wassertanks in Kommunikation steht und ein zweites Ende des Dampfeinlasskanals mit der Innenseite des Wassertanks in Kommunikation steht; und
eine Laufplatte (32), wobei die Laufplatte (32) an einem oberen Teil des Wassertanks angeordnet und lösbar mit dem Wasseraufnahmebehälter (31) verbunden ist, und wobei die Laufplatte (32) mit dem Wasseraufnahmebehälter (31) zusammenwirkt, um einen Montageraum zum Montieren einer Waschmittelschublade (2) zu bilden;
die Waschmittelschublade (2) in dem Montageraum montiert ist, wobei eine Bodenwand der Waschmittelschublade (2) in einem vordefinierten Abstand zu einer Oberseite des Wassertanks des Wasseraufnahmebehälters gehalten wird, um eine Dampfeinlasslücke zu bilden; **dadurch gekennzeichnet, dass** der Dampfeinlassteil ferner eine Dampfeinlassöffnung (33) umfasst, wobei die Dampfeinlassöffnung (33) auf einer Seitenwand des Wasseraufnahmebehälters (31) angeordnet ist und ein Ende der Dampfeinlassöffnung (33) mit einem ersten Ende des Dampfeinlasskanals verbunden ist, während das andere Ende der Dampfeinlassöffnung dazu ausgestaltet ist, Einlassdampf einzubringen; der Dampfeinlasskanal einen ersten Dampfeinlasskanal, einen zweiten Dampfeinlasskanal, einen dritten Dampfeinlasskanal und einen vierten Dampfeinlasskanal umfasst, die in Sequenz verbunden sind, wobei
der erste Dampfeinlasskanal, der zweite Dampfeinlasskanal, der dritte Dampfeinlasskanal und der vierte Dampfeinlasskanal Richtungsänderungspunkte an Verbindungsstellen bilden und entlang einer Erstreckungsrichtung des Dampfeinlasskanals angeordnet sind, so dass der Dampfeinlasskanal Querschnittsflächen unterschiedlicher Größe aufweist; wobei der erste Dampfeinlasskanal mit einer Verteilerplatte (35) versehen ist, die entlang der Erstreckungsrichtung eines Kanals zum Verflüssigen und Umleiten des Einlassdampfes angeordnet ist;
eine Richtung des Einlassdampfes darin besteht, dass ein Dampfstrom in die Dampfeinlassöffnung (33) eintritt und dann durch einen Dampfauslass des ersten Dampfeinlasskanals in den zweiten Dampfeinlasskanal eintritt, die Richtung ändert, um vom zweiten Dampfeinlasskanal nach oben zu fließen, dann eine Änderung durchläuft, um nach rechts oder links durch den dritten Dampfeinlasskanal zu fließen, dann nach unten durch den vierten Dampfeinlasskanal fließt und sich schließlich aus einem Dampfauslass des vierten Dampfeinlasskanals am unteren Ende zum vorderen Ende eines Endes nahe des Ablauflochs des Wassertanks bewegt.

2. Waschmitteldosieranordnung für den Waschtrockner nach Anspruch 1, wobei der Wasseraufnahmebehälter (31) mit einem Ablaufloch versehen ist, das mit dem Wassertank verbunden ist, und das Ablaufloch an einem Boden des Wasseraufnahmebehälters (31) angeordnet ist und sich an einem Ende befindet, das von dem Dampfeinlasskanal entfernt liegt.

3. Waschmitteldosieranordnung für den Waschtrockner nach Anspruch 1, wobei ein Ende des ersten Dampfeinlasskanals, das mit einem Dampfauslass versehen ist, ferner mit einem Dampfeinlassteilloch (34) versehen ist und das Dampfeinlassteilloch (34) dazu ausgestaltet ist, einen Teil des Einlassdampfs
und/oder des Kondensats, das im Dampfeinlasskanal verflüssigt ist, in den Wassertank umzuleiten.

4. Waschmitteldosieranordnung für den Waschtrockner nach Anspruch 1, wobei die Bodenwand der Waschmittelschublade (2) mit einem Stromablenkelement (21) versehen ist und das Stromablenkelement dazu ausgestaltet ist, Einlassdampf zu führen und eine Kontaktfläche mit dem Einlassdampf zu erhöhen.

5. Waschmitteldosieranordnung für den Waschtrockner nach Anspruch 1, wobei die Waschmitteldosieranordnung ferner eine Platte (1) umfasst, wobei
die Platte (1) mit einem Montageteil versehen ist, der dazu ausgestaltet ist, die Wasserkastenanordnung zu montieren, und die Platte (1) mit einer Waschmittelschubladenanordnungsöffnung versehen ist, wobei die Waschmittelschublade (2) in die Waschmittelschubladenanordnungsöffnung eingesetzt und mit der Wasserkastenanordnung gleitverbunden ist.

6. Waschtrockner, wobei der Waschtrockner die Waschmitteldosieranordnung nach einem der Ansprüche 1 bis 5 umfasst.

## Revendications

1. Ensemble de distribution de détergent pour un lave-linge séchant, dans lequel l'ensemble de distribution comprend un ensemble boîte à eau et une boîte à détergent (2), dans lequel l'ensemble boîte à eau (3) comprend :
une trémie de réception d'eau (31), la trémie de réception d'eau (31) étant pourvue d'un réservoir d'eau, la trémie de réception d'eau (31) étant pourvue d'une partie d'entrée de vapeur (30) reliant l'intérieur et l'extérieur du réservoir d'eau, la partie d'entrée de vapeur (30) comprenant un canal d'entrée de vapeur,
le canal d'entrée de vapeur présentant des changements de direction à plusieurs étages dans une direction d'extension de celui-ci, une première extrémité du canal d'entrée de vapeur étant en communication avec l'extérieur du réservoir d'eau, et une seconde extrémité du canal d'entrée de vapeur étant en communication avec l'intérieur du réservoir d'eau ; et
une plaque de roulement (32), la plaque de roulement (32) étant agencée au niveau d'une partie supérieure du réservoir d'eau et étant reliée de manière amovible à la trémie de réception d'eau (31), et la plaque de roulement (32) coopérant avec la trémie de réception d'eau (31) pour former un espace de montage pour le montage d'une boîte à détergent (2) ;
la boîte à détergent (2) est montée dans l'espace de montage, dans lequel une paroi de fond de la boîte à détergent (2) est maintenue à un intervalle prédéterminé par rapport à une surface supérieure du réservoir d'eau de la trémie de réception d'eau pour former un interstice d'entrée de vapeur ; **caractérisé en ce que**
la partie d'entrée de vapeur comprend en outre un orifice d'entrée de vapeur (33), dans lequel l'orifice d'entrée de vapeur (33) est agencé sur une paroi latérale de la trémie de réception d'eau (31), et une extrémité de l'orifice d'entrée de vapeur (33) est reliée à une première extrémité du canal d'entrée de vapeur tandis que l'autre extrémité de l'orifice d'entrée de vapeur est configurée pour introduire de la vapeur d'entrée ;
le canal d'entrée de vapeur comprend un premier canal d'entrée de vapeur, un deuxième canal d'entrée de vapeur, un troisième canal d'entrée de vapeur et un quatrième canal d'entrée de vapeur qui sont reliés en séquence, dans lequel
le premier canal d'entrée de vapeur, le deuxième canal d'entrée de vapeur, le troisième canal d'entrée de vapeur et le quatrième canal d'entrée de vapeur forment des points de changement de direction au niveau d'emplacements de liaison et sont agencés le long d'une direction d'extension du canal d'entrée de vapeur,
de sorte que le canal d'entrée de vapeur présente des surfaces de section transversale de taille variable ; dans lequel le premier canal d'entrée de vapeur est pourvu d'une plaque de division (35) agencée le long de la direction d'extension d'un canal pour liquéfier et dévier la vapeur d'entrée ; une direction de la vapeur d'entrée est telle qu'un flux de vapeur pénètre dans l'orifice d'entrée de vapeur (33) puis pénètre dans le deuxième canal d'entrée de vapeur par une sortie de vapeur du premier canal d'entrée de vapeur, change de direction pour s'écouler vers le haut à partir du deuxième canal d'entrée de vapeur, puis change pour s'écouler vers la droite ou la gauche à travers le troisième canal d'entrée de vapeur, puis s'écoule vers le bas à travers le quatrième canal d'entrée de vapeur, et
se déplace enfin à partir d'une sortie de vapeur du quatrième canal d'entrée de vapeur au niveau de l'extrémité inférieure vers l'extrémité avant d'une extrémité, proche du trou de vidange, du réservoir d'eau.

2. Ensemble de distribution de détergent pour le lave-linge séchant selon la revendication 1, dans lequel la trémie de réception d'eau (31) est pourvue d'un trou de vidange relié au réservoir d'eau, et le trou de vidange est agencé au niveau d'un fond de la trémie de réception d'eau (31) et est situé au niveau d'une extrémité éloignée du canal d'entrée de vapeur.

3. Ensemble de distribution de détergent pour le lave-linge séchant selon la revendication 1, dans lequel une extrémité, pourvue d'une sortie de vapeur, du premier canal d'entrée de vapeur est en outre pourvue d'un trou d'entrée de vapeur secondaire (34), et le trou d'entrée de vapeur secondaire (34) est configuré pour dévier directement une partie de la vapeur d'entrée et/ou de la condensation liquéfiée dans le canal d'entrée de vapeur vers l'intérieur du réservoir d'eau.

4. Ensemble de distribution de détergent pour le lave-linge séchant selon la revendication 1, dans lequel la paroi de fond de la boîte à détergent (2) est pourvue d'un déflecteur d'écoulement (21), et le déflecteur d'écoulement est configuré pour guider la vapeur d'entrée et augmenter une surface de contact avec la vapeur d'entrée.

5. Ensemble de distribution de détergent pour le lave-linge séchant selon la revendication 1, dans lequel l'ensemble de distribution de détergent comprend en outre un panneau (1), dans lequel
le panneau (1) est pourvu d'une partie de montage configurée pour monter l'ensemble boîte à eau, et le panneau (1) est pourvu d'une ouverture d'ensemble boîte à détergent, dans lequel la boîte à détergent (2) est insérée dans l'ouverture d'ensemble boîte à détergent et est reliée de manière coulissante à l'ensemble boîte à eau.

6. Lave-linge séchant, dans lequel le lave-linge séchant comprend l'ensemble de distribution de détergent selon l'une quelconque des revendications 1 à 5.
